(19) Europäisches Patentamt
European Patent Office
Office européen des brevets

(11) **EP 2 721 102 B1**

(12) **FASCICULE DE BREVET EUROPEEN**

(45) Date de publication et mention
de la délivrance du brevet:
**12.09.2018  Bulletin 2018/37**

(21) Numéro de dépôt: **12731562.0**

(22) Date de dépôt: **13.06.2012**

(51) Int Cl.:
*C03C 25/26* (2018.01)   *C03C 25/25* (2018.01)
*C08K 3/30* (2006.01)   *C08K 3/32* (2006.01)
*C08K 5/1545* (2006.01)   *D04H 1/64* (2012.01)
*C08L 5/00* (2006.01)   *C09J 105/00* (2006.01)
*C08K 5/1535* (2006.01)   *C08K 7/14* (2006.01)
*C09J 197/00* (2006.01)   *C08L 97/00* (2006.01)

(86) Numéro de dépôt international:
**PCT/FR2012/051321**

(87) Numéro de publication internationale:
**WO 2012/172252 (20.12.2012 Gazette 2012/51)**

(54) **LIANT POUR MAT DE FIBRES MINERALES ET/OU ORGANIQUES ET PRODUITS OBTENUS**

BINDEMITTEL FÜR EINE ANORGANISCHE UND/ODER ORGANISCHE FASERMATTE UND PRODUKTE DARAUS

BINDER FOR AN INORGANIC AND/OR ORGANIC FIBRE MAT AND PRODUCTS OBTAINED

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **17.06.2011  FR 1155325**

(43) Date de publication de la demande:
**23.04.2014  Bulletin 2014/17**

(73) Titulaire: **Saint-Gobain Adfors
73000 Chambéry (FR)**

(72) Inventeurs:
• **VARAGNAT, Matthieu
F-75019 Paris (FR)**
• **CHUDA, Katarzyna
F-92600 Asnières Sur Seine (FR)**
• **BARRAUD, Thomas
69003 Lyon (FR)**

(74) Mandataire: **Saint-Gobain Recherche
Département Propriété Industrielle
39 Quai Lucien Lefranc
93300 Aubervilliers (FR)**

(56) Documents cités:
DE-A1-102005 051 350     FR-A1- 2 264 845
FR-A1- 2 924 719

**Description**

La présente invention se rapporte au domaine des mats comprenant des fibres minérales et/ou organiques, liées par un liant organique exempt de formaldéhyde, en particulier des fibres de verre ou de roche.

L'invention concerne plus particulièrement un mat comprenant un liant aqueux apte à réticuler thermiquement qui renferme au moins un sel d'acide lignosulfonique, au moins un sucre renfermant 1 à 10 motifs saccharidiques et au moins un catalyseur de réticulation des composés précités, ainsi que les mats de telles fibres qui en résultent.

Les mats de fibres minérales (aussi appelés « intissés » ou « voiles ») peuvent être fabriqués selon les procédés connus opérant par voie sèche ou par voie humide.

Dans le procédé par voie sèche, de la matière minérale fondue contenue dans un four est acheminée vers un ensemble de filières à partir desquelles des filaments s'écoulent par gravité et sont étirés par un fluide gazeux. Les filaments minéraux sont récoltés sur un convoyeur où ils s'entremêlent en formant un mat.

Sur la face supérieure du mat ainsi formé, on applique un liant à l'aide d'un dispositif adapté, le plus souvent opérant par dépôt par rideau, et on élimine l'excès de liant par aspiration au niveau de la face opposée. Le mat entre ensuite dans un dispositif contenant de l'air chaud dont la température, de l'ordre de 200 à 250°C, est adaptée pour éliminer l'eau et réticuler le liant en un temps très court, de l'ordre d'une dizaine de secondes à 1 minute, puis le mat de fibres minérales est collecté sous la forme d'un enroulement.

Dans le procédé par voir humide, le mat est obtenu à partir d'une dispersion aqueuse de fibres minérales coupées qui est déposée au moyen d'une tête de formage sur un convoyeur muni de perforations et l'eau est extraite à travers le convoyeur grâce à un caisson d'aspiration. Les fibres minérales coupées restant sur le convoyeur forment un mat qui est traité dans les mêmes conditions que celles décrites pour le procédé par voie sèche.

Dans les procédés précités, le liant a pour fonction de lier les fibres minérales entre-elles et de conférer au mat qui les contient des propriétés mécaniques adaptées à l'usage désiré, notamment une rigidité suffisante pour pouvoir être manipulé facilement sans risque notamment qu'il puisse être déchiré.

Le liant à appliquer sur les fibres minérales se présente généralement sous la forme d'une solution aqueuse renfermant au moins une résine thermodurcissable et des additifs tels qu'un catalyseur de réticulation de la résine, un silane promoteur d'adhérence, un hydrofugeant, ...

Les résines thermodurcissables les plus couramment utilisées sont des résines à base de formaldéhyde, notamment phénoliques appartenant à la famille des résols, des résines urée-formaldéhyde et des résines mélamine-formaldéhyde. Ces résines ont une bonne aptitude à réticuler dans les conditions thermiques précitées, sont solubles dans l'eau, possèdent une bonne affinité pour les fibres minérales et sont en outre relativement peu coûteuses.

Toutefois, ces résines sont susceptibles de contenir du formaldéhyde libre dont la présence n'est pas souhaitée du fait des effets indésirables au regard de la santé humaine et de l'environnement. Depuis plusieurs années, la réglementation en matière de protection de l'environnement devient plus contraignante et oblige les fabricants de résine et de mats de fibres à rechercher des solutions permettant d'abaisser encore le taux de formaldéhyde libre.

Des solutions de remplacement des résines à base de formaldéhyde pour lier des fibres minérales sont connues et se fondent sur l'emploi d'un polymère d'acide carboxylique, notamment d'acide acrylique, en combinaison avec un β-hydroxylamide et un acide carboxylique monomérique au moins trifonctionnel. (US 5 340 868).

Il a été proposé des compositions adhésives comprenant un polymère polycarboxylique, un polyol et un catalyseur, lequel catalyseur est un catalyseur contenant du phosphore (US 5 318 990, US 5 661 213, US 6331 350, US 2003/0008978), un fluoroborate (US 5 977 232) ou bien un cyanamide, un dicyanamide ou une cyanoguanidine (US 5 932 689).

Il a aussi été décrit des compositions adhésives comprenant une alcanolamine renfermant au moins deux groupements hydroxyle et un polymère polycarboxylique (US 6 071 994, US 6 099 773, US 6 146 746, US 2002/0091185) associé à un copolymère (US 6 299 936), à un tensioactif cationique, amphotère ou non ionique (US 2002/0188055) ou à un silane (US 2004/0002567).

Dans US 2005/0215153, la composition adhésive est formée à partir d'un pré-liant contenant polymère d'acide carboxylique et d'un polyol, et d'une dextrine en tant que co-liant.

Par ailleurs, on connaît des compositions adhésives à base de saccharides thermoréticulables.

Dans US 5 895 804, la composition adhésive comprend un polymère polycarboxylique ayant au moins deux groupes fonctionnels acide carboxylique et un poids moléculaire au moins égal à 1000, et un polysaccharide ayant un poids moléculaire au moins égal à 10000.

Dans WO 2009/080938, il est décrit une composition d'encollage pour de la laine minérale ou un voile de fibres minérales comprenant au moins un monosaccharide et/ou au moins un polysaccharide et au moins un acide organique polycarboxylique ayant une masse molaire inférieure ou égale à 1000.

La présente invention s'intéresse plus particulièrement aux mats de fibres minérales se présentant sous la forme de voiles qui sont destinés à la fabrication de membranes d'étanchéité bitumineuses pour toitures (« roofing membranes » en anglais).

L'invention a ainsi pour but de proposer des mats de fibres minérales et/ou organiques, en particulier des fibres de verre ou de roche, dont le liant est exempt de formaldéhyde, et présente une bonne résistance au vieillissement en milieu humide et à l'application de bitume en fusion, tout en ayant des propriétés mécaniques satisfaisantes, notamment une bonne résistance en traction.

Pour atteindre ce but, la présente invention propose un mat à base de fibres comprenant un liant selon la revendication 1. Le liant aqueux comprend, en parts pondérales :

- 20 à 95 parts d'au moins un sel d'acide lignosulfonique,
- 5 à 80 parts d'au moins un sucre renfermant 1 à 10 motifs saccharidiques, et
- 5 à 20 parts d'un catalyseur de réticulation choisi parmi les composés contenant du phosphore et les sulfates pour 100 parts de sel d'acide lignosulfonique et de sucre renfermant 1 à 10 motifs saccharidiques,

ladite composition étant dénuée d'acide organique polycarboxylique.

Le sel d'acide lignosulfonique est généralement un mélange complexe de plusieurs acides lignosulfoniques sous forme salifiée, communément dénommé « lignosulfonate ». Les lignosulfonates sont des sous-produits issus du traitement du bois pour la fabrication de la pâte à papier selon le procédé dit « au sulfite ». Ce procédé, qui met en oeuvre un sulfite ou un bisulfite, permet selon la nature du contre-ion employé, d'obtenir des lignosulfonates de sodium, de calcium, de potassium, de magnésium ou d'ammonium. Le sel d'acide lignosulfonique préféré selon l'invention est le lignosulfonate d'ammonium.

Les lignosulfonates permettent de conférer au liant une bonne résistance au feu. A titre d'exemple de sucre renfermant 1 à 10 motifs saccharidiques, on peut citer les monosaccharides, de préférence renfermant 5 à 7 atomes de carbone, notamment le glucose, le mannose, le galactose et le fructose ; les disaccharides tels que le saccharose, le maltose, le cellobiose, le tréhalose, le lactose, le gentobiose et le mélibiose ; les trisaccharides tels que le raffinose et le gentianose ; les tétrasaccharides tels que le stachyose ; et les polymères de fructose, notamment les fructanes et en particulier les inulines, ces polymères de fructose étant constitués d'au plus 10 motifs saccharidiques comme indiqué précédemment.

Le sucre renfermant 1 à 10 motifs saccharidiques peut être un mélange renfermant une forte proportion (au moins 40 % en poids) d'un ou plusieurs sucres renfermant 1 à 10 motifs saccharidiques précités, en particulier une mélasse ou une dextrine.

Dans le liant, le sel d'acide lignosulfonique représente de préférence 30 à 90 % du poids du mélange constitué par le sel d'acide lignosulfonique et Z le sucre renfermant 1 à 10 motifs saccharidiques, avantageusement 40 à 80 % et mieux encore 50 à 70 %.

Le catalyseur de réticulation a pour fonction d'accélérer la formation de liaisons ester entre le sel d'acide lignosulfonique et le sucre sous l'effet de la chaleur qui conduit à l'obtention d'un réseau polymérique dans le liant final. Ledit réseau polymérique permet d'établir des liaisons au niveau des points de jonction des fibres dans la laine minérale. Le catalyseur permet en outre d'ajuster la température de début de réticulation du liant.

Comme déjà mentionné, le catalyseur de réticulation est choisi parmi les composés contenant du phosphore et les sulfates.

A titre d'exemples, on peut citer les sels d'hypophosphite de métal alcalin, les phosphites de métal alcalin, les polyphosphates de métal alcalin, les hydrogénophosphates de métal alcalin, les acides phosphoriques et les acides alkylphosphoniques, dans lesquels le métal alcalin est de préférence le sodium ou le potassium ; les phosphates d'ammonium, notamment le phosphate diammonique ; et le sulfate d'ammonium. On préfère tout particulièrement l'hypophosphite de sodium, le phosphate diammonique et le sulfate d'ammonium.

De préférence, la quantité de catalyseur de réticulation dans le liant représente au plus 20 % du poids du sel d'acide lignosulfonique et du sucre renfermant 1 à 10 motifs saccharidiques, avantageusement au plus 15 % et mieux encore au plus 10 %.

Le liant peut comprendre en outre jusqu'à 15 parts en poids d'un polymère d'acétate de vinyle pour 100 parts en poids du mélange constitué par le sel d'acide lignosulfonique et le sucre renfermant 1 à 10 motifs saccharidiques, de préférence jusqu'à 10 parts.

Le polymère d'acétate de vinyle peut être un homopolymère ou un copolymère, par exemple d'au moins un monomère hydrophobe tel que l'éthylène, le propylène, le butylène, le styrène et le chlorure de vinyle, en particulier un copolymère d'éthylène et d'acétate de vinyle (EVA).

Le liant peut comprendre encore comprendre jusqu'à 50 parts en poids d'un polysaccharide de masse molaire supérieure ou égale à 100000 g/mol, par exemple un amidon, pour 100 parts en poids de sel d'acide lignosulfonique et de sucre renfermant 1 à 10 motifs saccharidiques.

Le liant conforme à l'invention peut comprendre en outre les additifs conventionnels ci-après dans les proportions suivantes calculées sur la base de 100 parts en poids de sel d'acide lignosulfonique et de sucre renfermant 1 à 10 motifs saccharidiques :

- 0 à 1 part en poids de silane, en particulier un aminosilane, de préférence 0,1 à 0,5 part,
- 0 à 5 parts en poids d'un silicone, d'une huile végétale ou d'un composé fluoré, de préférence 0,1 à 1 part, et
- 0 à 5 parts en poids d'un agent plastifiant, en particulier le glycérol.

Le rôle des additifs est connu et brièvement rappelé : le silane est un agent de couplage entre les fibres et le liant, et joue également le rôle d'agent anti-vieillissement ; le silicone, l'huile végétale ou le composé fluoré sont des agents hydrofugeants qui ont pour fonction de réduire l'absorption d'eau par le mat de fibres minérales.

Le liant se présente sous la forme d'une solution, d'une émulsion ou d'une dispersion aqueuse.

Le liant est destiné à être appliqué sur des mats de fibres de toute nature, qu'elles soient minérales et/ou organiques, et préférentiellement minérales.

Les fibres minérales peuvent être constituées de verre ou d'une roche, en particulier le basalte, et de préférence de verre.

De manière classique, on dépose le liant sur le mat de fibres minérales (formé par la voie sèche ou la voie humide), puis le mat est traité à une température permettant la réticulation du liant qui devient alors infusible. La réticulation du liant selon l'invention se fait à une température comparable à celle d'une résine conventionnelle contenant du formaldéhyde, qui varie généralement de 200 à 220°C, et pendant une durée très courte, de l'ordre de quelques secondes à 1 minute.

Les fibres minérales sont aussi bien des filaments que des fils composés d'une multitude de filaments liés ensemble, notamment par un ensimage, et des assemblages de tels fils.

Ainsi, selon un premier mode de réalisation, le mat de fibres minérales est composé de filaments minéraux discontinus de longueur pouvant atteindre 150 mm, de préférence variant de 20 et 100 mm et avantageusement de 50 à 70 mm, et ayant un diamètre qui peut varier dans une large mesure, par exemple de 5 à 30 $\mu$m.

Selon un deuxième mode de réalisation, le mat de fibres minérales est composé de fils minéraux.

Les fils minéraux peuvent être des fils composés d'une multitude de filaments minéraux (ou fils de base) ou des assemblages de ces fils de base en stratifils (« rovings » en anglais).

Les fils précités peuvent être des fils sans torsion ou des fils retordus (ou fils textiles), de préférence sans torsion.

Les fils minéraux, notamment de verre, sont généralement coupés à une longueur pouvant aller jusqu'à 100 mm, de préférence variant de 6 à 30 mm, avantageusement de 8 à 20 mm et mieux encore de 10 à 18 mm.

Le diamètre des filaments de verre constituant les fils peut varier dans une large mesure, par exemple 5 à 30 $\mu$m. De la même manière, de larges variations peuvent survenir dans la masse linéaire du fil qui peut aller de 34 à 1500 tex.

Le verre entrant dans la constitution des filaments peut être de tout type, par exemple C, E, R, AR (alcali-résistant). On préfère le verre C.

Les fibres organiques peuvent être des fibres synthétiques ou des fibres naturelles.

A titre d'exemples de fibres synthétiques, on peut citer les fibres à base d'une oléfine telle que le polyéthylène et le polypropylène, d'un polytéréphtalate d'alkylène tel que le polytéréphtalate d'éthylène ou d'un polyester.

A titre d'exemples de fibres naturelles, on peut citer les fibres végétales, notamment de coton, de noix de coco, de sisal, de chanvre ou de lin, et les fibres animales notamment la soie ou la laine.

Le mat peut, le cas échéant, être renforcé par des fibres continues qui sont généralement déposée sur le dispositif de convoyage du mat dans le sens d'avancement du mat et réparties sur tout ou partie de la largeur du mat. Ces fibres sont généralement déposées dans l'épaisseur du mat de fibres, notamment minérales, avant l'application du liant.

Les fibres de renforcement peuvent être des fibres minérales et/ou organiques de même nature chimique que les fibres précitées constituant le mat de fibres selon l'invention.

Les fibres de renforcement en verre sont préférées.

Le mat de fibres, notamment minérales, présente généralement une masse surfacique qui varie de 10 à 1100 g/m², de préférence 30 à 350 g/m², avantageusement 35 à 60 g/m².

Le liant représente généralement 5 à 40 % en poids du mat de fibres, notamment minérales, de préférence 10 à 30 %.

En règle générale, les fibres constituant le mat selon l'invention sont constituées à plus de 50 % en poids de fibres minérales, de préférence à plus de 75 % et avantageusement à 100 %. De manière particulièrement préférée, les fibres sont en verre.

Bien qu'étant plus particulièrement destiné à la réalisation de membranes d'étanchéité bitumineuses, le mat de fibres minérales conforme à la présente invention peut aussi être utilisé dans d'autres applications, par exemple en tant que revêtement, à peindre ou non, à appliquer sur les murs et/ou les plafonds, revêtement de surface ou de jointement de panneaux de plâtre ou de ciment, revêtement de surface de produits d'isolation thermique et/ou phonique tels qu'une laine minérale ou une mousse destinée plus particulièrement à l'isolation des toitures, ou pour la réalisation de revêtement de sol, notamment une sous-couche acoustique.

L'utilisation du mat conforme à la présente invention en tant que revêtement de surface de produits d'isolation à base de laine minérale s'est révélée particulièrement avantageuse.

Les exemples qui suivent permettent d'illustrer l'invention sans toutefois la limiter.

Dans ces exemples, on mesure la contrainte à la rupture d'un échantillon de 5 cm x 25 cm fixé à une extrémité sur un banc de traction et soumis à une élongation continue de 40 mm/minute. La contrainte à la rupture est exprimée en N/5 cm.

La contrainte à la rupture est mesurée après la fabrication (initiale) et après que l'échantillon a été traité dans les conditions suivantes : (a) vieillissement accéléré dans une enceinte chauffé à 50°C sous 98 % d'humidité relative pendant 3 jours, (b) traitement dans de l'eau à 80°C pendant 10 minutes, (c) traitement à 200°C pendant 15 secondes. On exprime le résultat par le pourcentage de rétention qui est égal à : (contrainte à la rupture après traitement/contrainte à la rupture initiale) x 100.

## EXEMPLES 1 A 15

Ces exemples ont pour but de comparer les liants entre eux.

On prépare des liants aqueux comprenant les constituants figurant dans le tableau 1 dans des proportions exprimées en parts pondérales de matières solides.

Les liants sont préparés en introduisant les différents constituants dans un récipient contenant de l'eau à la température ambiante, sous agitation modérée.

La teneur en matières solides (extrait sec) des liants est égale à 30 %

On immerge un microfiltre de fibres de verre (Whatman GF/A, 50 g/m$^2$ ; commercialisé par la société Whatman) dans le liant pendant 30 secondes puis on élimine l'excès par aspiration. Le microfiltre est ensuite traité dans une étuve à 200°C pendant 135 secondes. Au final, le microfiltre contient 45 % en poids de liant.

Les propriétés de chaque microfiltre sont données dans le tableau 1.

Les exemples 8, 10, 5 et 1 présentent les meilleures performances : une valeur élevée de la résistance en traction initiale et après vieillissement accéléré se traduisant par un fort pourcentage de rétention.

## EXEMPLES 16 A 19

a) préparation des liants

On prépare des liants aqueux comprenant les constituants figurant dans le tableau 2 exprimé en parts pondérales de matières solides dans les conditions des exemples 1 à 15.

La teneur en matières solides (extrait sec) des liants est égale à 20 %.

b) fabrication des mats

Dans une installation industrielle de 1,3 m de large, on fabrique un mat de fibres de verre C de 68 g/m$^2$ selon le procédé par voie sèche, ledit mat étant collecté sous la forme d'un rouleau de 200 m de longueur. Le liant est appliqué par dépôt par rideau et représente de l'ordre de 29 % en poids du mat final.

A titre de comparaison, on a également préparé un mat dans les conditions précitées en utilisant un liant comprenant une résine urée-formaldéhyde traditionnelle (Préféré® 71400 J commercialisée par la société Dynea) à 20 % de matières solides (Référence). Le mat obtenu contient 22,5 % en poids de liant.

On découpe deux séries d'échantillons de 5 cm X 25 cm, l'une dans la « direction machine » (la longueur étant disposée dans le sens d'avancement du mat) et l'autre dans la « direction transverse » (à 90° par rapport à la direction précédente). Les résultats mentionnés dans le tableau 2 sont calculés selon la relation suivante :

$$(CR_m + Cr)/2 \times (68/x)$$

dans laquelle

CR$_m$ est la contrainte à la rupture dans la direction machine, en N/5 cm
Cr est la contrainte à la rupture dans la direction transverse, en N/5 cm
68 est le grammage visé, en g/m$^2$
x est le grammage mesuré, en g/m$^2$.

Les propriétés de chaque mat sont données dans le tableau 2.

Tableau 1

| | Ex. 1 | Ex. 2 | Ex. 3 | Ex. 4 | Ex. 5 | Ex. 6 | Ex. 7 | Ex. 8 | Ex. 9 | Ex. 10 | Ex. 11 | Ex. 12 | Ex. 13 | Ex. 14 | Ex. 15 |
|---|---|---|---|---|---|---|---|---|---|---|---|---|---|---|---|
| **Composition du liant** | | | | | | | | | | | | | | | |
| - Lignosulfonate d'ammonium[1] | 70 | 60 | 50 | 50 | 50 | 40 | 30 | 50 | 50 | 50 | 50 | 50 | 50 | 50 | 50 |
| - | | | | | | | | | | | | | | | |
| saccharose | 30 | 40 | 50 | 50 | 50 | 60 | 70 | - | - | - | - | - | - | - | - |
| glucose | - | - | - | - | - | - | - | 50 | 50 | 50 | - | - | - | - | - |
| fructose | - | - | - | - | - | - | - | - | - | - | 50 | 50 | - | - | - |
| raffinose | - | - | - | - | - | - | - | - | - | - | - | - | 50 | 50 | - |
| inuline | - | - | - | - | - | - | - | - | - | - | - | - | - | - | 50 |
| - catalyseur | | | - | - | - | - | - | - | - | - | - | - | - | - | - |
| phosphate diammonique | 10 | 10 | 5 | 10 | 15 | 10 | 10 | 5 | 10 | 15 | 5 | 10 | 5 | 10 | 5 |
| **Propriétés du microfiltre** | | | | | | | | | | | | | | | |
| Contrainte à la rupture (N/5cm) | | | | | | | | | | | | | | | |
| - initiale | 120,0 | 101,0 | 97,1 | 110,2 | 85,7 | 116,0 | 116,0 | 112,1 | 107,1 | 115,9 | 110,9 | 101,0 | 104,2 | 90,4 | 83,1 |
| - après vieillissement accéléré[a] | n. d. | n. d. | 50,6 | 44,2 | 43,5 | n. d. | n. d. | 43,0 | 50,4 | 40,2 | 39,4 | 89,5 | 15,0 | 58,1 | 15,5 |
| - % rétention | n. d. | n. d. | 52 | 40 | 51 | n. d. | | 38 | 47 | 35 | 36 | 89 | 14 | 64 | 19 |

[1] commercialisé sous la référence T5 par la société TEMBEC n. d. : non déterminé

EP 2 721 102 B1

Tableau 2

|  | Ex. 16 | Ex. 17 | Ex. 18 | Ex. 19 | Réf. |
|---|---|---|---|---|---|
| **Composition du liant** | | | | | |
| - Lignosulfonate d'ammonium[1] | 50 | 50 | 50 | 50 | - |
| - | | | | | |
| saccharose | 50 | 50 | - | - | - |
| maltose | - | - | 50 | - | - |
| lactose | - | - | - | 50 | - |
| arabinose | - | - | - | - | - |
| - catalyseur | | | | | |
| phosphate diammonique | 10 | - | 10 | 10 | - |
| sulfate d'ammonium | - | 10 | - | - | - |
| **Propriétés du mat** | | | | | |
| Contrainte à la rupture (N/5cm) | | | | | |
| - initiale | 175,3 | 107,8 | 85,0 | 86,3 | 136,2 |
| - après traitement dans l'eau[b] | 111,6 | 67,9 | 83,0 | 56,8 | 42,9 |
| % derétention | 63,5 | 62,9 | 97,7 | 65,8 | 31,5 |
| - après traitement à chaud[c] | 153,3 | 117,7 | 96,0 | 100,9 | n. d. |
| % de rétention | 87,4 | 109,1 | 118,7 | 129,4 | n. d. |
| n. d. : non déterminé [1] commercialisé sous la référence T5 par la société TEMBEC | | | | | |

**Revendications**

**1.** Mat à base de fibres comprenant un liant aqueux **caractérisé en ce qu'**il comprend, en parts pondérales :

- 20 à 95 parts d'au moins un sel d'acide lignosulfonique,
- 5 à 80 parts d'au moins un sucre renfermant 1 à 10 motifs saccharidiques, et
- 5 à 20 parts d'un catalyseur de réticulation choisi parmi les composés contenant du phosphore et les sulfates pour 100 parts de sel d'acide lignosulfonique et de sucre renfermant 1 à 10 motifs saccharidiques,

ladite composition étant dénuée d'acide organique polycarboxylique.

**2.** Mat selon la revendication 1, **caractérisé en ce que** le sel d'acide lignosulfonique est choisi parmi les lignosulfonates de sodium, de calcium, de potassium, de magnésium ou d'ammonium.

**3.** Mat selon la revendication 2, **caractérisé en ce que** le sel d'acide lignosulfonique est un lignosulfonate d'ammonium.

**4.** Mat selon l'une des revendications 1 à 3, **caractérisé en ce que** le sucre est un monosaccharide, un disaccharide, un trisaccharide, un tétrasaccharide ou un polymère de fructose tel qu'un fructane.

**5.** Mat selon la revendication 4, **caractérisé en ce que** le sucre est choisi parmi le glucose, le mannose, le galactose, le fructose, le saccharose, le maltose, le cellobiose, le tréhalose, le lactose, le gentobiose, le mélibiose, le raffinose, le gentianose, le stachyose et les inulines.

**6.** Mat selon l'une des revendications 1 à 5, **caractérisé en ce que** le sel d'acide lignosulfonique représente 30 à 90 % du poids du mélange constitué par le sel d'acide lignosulfonique et le sucre renfermant 1 à 10 motifs saccharidiques.

**7.** Mat selon la revendication 6, **caractérisé en ce que** le sel d'acide lignosulfonique représente 40 à 80 % du poids du mélange constitué par le sel d'acide lignosulfonique et le sucre renfermant 1 à 10 motifs saccharidiques.

**8.** Mat selon la revendication 7, **caractérisé en ce que** le sel d'acide lignosulfonique représente 50 à 70 % du poids du mélange constitué par le sel d'acide lignosulfonique et le sucre renfermant 1 à 10 motifs saccharidiques.

9. Mat selon l'une des revendications 1 à 8, **caractérisé en ce que** le catalyseur de réticulation est un sel d'hypophosphite de métal alcalin, un phosphite de métal alcalin, un polyphosphate de métal alcalin, un hydrogénophosphate de métal alcalin, un acide phosphorique ou un acide alkylphosphonique, un phosphate d'ammonium et le sulfate d'ammonium.

10. Mat selon la revendication 9, **caractérisé en ce que** le métal alcalin du catalyseur de réticulation est le sodium ou le potassium.

11. Mat selon la revendication 9 ou 10, **caractérisé en ce que** le catalyseur de réticulation est l'hypophosphite de sodium, le phosphate diammonique ou le sulfate d'ammonium.

12. Mat selon l'une des revendications 1 à 11, **caractérisé en ce que** la quantité de catalyseur de réticulation représente au plus 15 % du poids du sel d'acide lignosulfonique et du sucre renfermant 1 à 10 motifs saccharidiques.

13. Mat selon la revendication 12, **caractérisé en ce que** la quantité de catalyseur de réticulation représente au plus 10 % du poids du sel d'acide lignosulfonique et du sucre renfermant 1 à 10 motifs saccharidiques.

14. Mat selon l'une des revendications 1 à 13, **caractérisé en ce qu'**il renferme en outre jusqu'à 15 parts en poids d'un polymère d'acétate de vinyle pour 100 parts en poids du mélange constitué par le sel d'acide lignosulfonique et le sucre renfermant 1 à 10 motifs saccharidiques.

15. Mat selon la revendication 14, **caractérisé en ce que** le polymère d'acétate de vinyle est un homopolymère ou un copolymère d'au moins un monomère hydrophobe tel que l'éthylène, le propylène, le butylène, le styrène et le chlorure de vinyle.

16. Mat selon l'une des revendications 1 à 15, **caractérisé en ce qu'**il comprend en outre jusqu'à 50 parts en poids d'un polysaccharide de masse molaire supérieure ou égale à 100000 g/mol pour 100 parts en poids de sel d'acide lignosulfonique et du sucre renfermant 1 à 10 motifs saccharidiques.

17. Mat selon l'une des revendications 1 à 16, **caractérisé en ce qu'**il comprend en outre les additifs conventionnels ci-après dans les proportions suivantes calculées sur la base de 100 parts en poids de sel d'acide lignosulfonique et du sucre renfermant 1 à 10 motifs saccharidiques :

- 0 à 1 part en poids de silane, en particulier un aminosilane,
- 0 à 5 parts en poids d'un silicone, d'une huile végétale ou d'un composé fluoré, et
- 0 à 5 parts en poids d'un agent plastifiant, en particulier le glycérol.

18. Mat selon l'une des revendications 1 à 17, **caractérisé en ce que** les fibres sont des fibres minérales ou des fibres organiques, synthétiques ou naturelles.

19. Mat selon l'une des revendications 1 à 18, **caractérisé en ce que** les fibres sont sous la forme de filaments minéraux discontinus, de fils minéraux composés d'une multitude de filaments minéraux (fils de base) ou d'assemblages de ces fils de base en stratifils.

20. Mat selon l'une des revendications 1 à 19, **caractérisé en ce qu'**il présente une masse surfacique qui varie de 10 à 1100 $g/m^2$.

21. Mat selon la revendication 20, **caractérisé en ce qu'**il présente une masse surfacique qui varie de 30 à 350 $g/m^2$.

22. Mat selon la revendication 21, **caractérisé en ce qu'**il présente une masse surfacique qui varie de 35 à 60 $g/m^2$.

23. Mat selon l'une des revendications 1 à 22, **caractérisé en ce que** le liant représente 5 à 40 % en poids du mat de fibres.

24. Mat selon la revendication 23, **caractérisé en ce que** le liant représente 10 à 30 % en poids du mat de fibres.

25. Mat selon l'une des revendications 1 à 24, **caractérisé en ce que** les fibres sont constituées à plus de 50 % en poids de fibres minérales.

26. Mat selon la revendication 25, **caractérisé en ce que** les fibres sont constituées à plus de 75 % en poids de fibres minérales.

27. Mat selon la revendication 26, **caractérisé en ce que** les fibres sont constituées à 100 % en poids de fibres minérales.

**Patentansprüche**

1. Matte auf der Basis von Fasern, umfassend ein wässriges Bindemittel, **dadurch gekennzeichnet, dass** sie in Gewichtsanteilen Folgendes umfasst:

   - 20 bis 95 Anteile mindestens eines Ligninsulfonsäuresalzes,
   - 5 bis 80 Anteile mindestens eines 1 bis 10 saccharidische Struktureinheiten enthaltenden Zuckers und
   - 5 bis 20 Anteile eines Vernetzungskatalysators, der unter Verbindungen gewählt ist,

   die Phosphor und Sulfate beinhalten, auf 100 Anteile Ligninsulfonsäuresalz und 1 bis 10 saccharidische Struktureinheiten enthaltenden Zucker, wobei die Verbindung frei von organischer Polycarbonsäure ist.

2. Matte nach Anspruch 1, **dadurch gekennzeichnet, dass** das Ligninsulfonsäuresalz unter den Natrium-, Calcium-, Kalium-, Magnesium- oder Ammoniumligninsulfonaten gewählt ist.

3. Matte nach Anspruch 2, **dadurch gekennzeichnet, dass** das Ligninsulfonsäuresalz ein Ammoniumligninsulfonat ist.

4. Matte nach einem der Ansprüche 1 bis 3, **dadurch gekennzeichnet, dass** der Zucker ein Monosaccharid, ein Disaccharid, ein Trisaccharid, ein Tetrasaccharid oder ein Fructosepolymer wie ein Fructan ist.

5. Matte nach Anspruch 4, **dadurch gekennzeichnet, dass** der Zucker unter Glucose, Mannose, Galactose, Fructose, Saccharose, Maltose, Cellobiose, Trehalose, Lactose, Gentobiose, Melibiose, Raffinose, Gentianose, Stachyose und Inulinen gewählt ist.

6. Matte nach einem der Ansprüche 1 bis 5, **dadurch gekennzeichnet, dass** das Ligninsulfonsäuresalz 30 bis 90 % des Gewichts des aus dem Ligninsulfonsäuresalz und dem 1 bis 10 saccharidische Struktureinheiten enthaltenden Zucker bestehenden Gemisches ausmacht.

7. Matte nach Anspruch 6, **dadurch gekennzeichnet, dass** das Ligninsulfonsäuresalz 40 bis 80 % des Gewichts aus dem Ligninsulfonsäuresalz und dem 1 bis 10 saccharidische Struktureinheiten enthaltenden Zucker bestehenden Gemisches ausmacht.

8. Matte nach Anspruch 7, **dadurch gekennzeichnet, dass** das Ligninsulfonsäuresalz 50 bis 70 % des Gewichts des aus dem Ligninsulfonsäuresalz und dem 1 bis 10 saccharidische Struktureinheiten enthaltenden Zucker bestehenden Gemisches ausmacht.

9. Matte nach einem der Ansprüche 1 bis 8, **dadurch gekennzeichnet, dass** der Vernetzungskatalysator ein Alkalimetallhypophosphitsalz, ein Alkalimetallphosphit, ein Alkalimetallpolyphosphat, ein Alkalimetallhydrogenphosphat, eine Phosphorsäure oder eine Alkylphosporsäure, ein Ammoniumphosphat und Ammoniumsulfat ist.

10. Matte nach Anspruch 9, **dadurch gekennzeichnet, dass** das Alkalimetall des Vernetzungskatalysators Natrium oder Kalium ist.

11. Matte nach Anspruch 9 oder 10, **dadurch gekennzeichnet, dass** der Vernetzungskatalysator Natriumhypophosphit, Diammoniumphosphat oder Ammoniumsulfat ist.

12. Matte nach einem der Ansprüche 1 bis 11, **dadurch gekennzeichnet, dass** die Vernetzungskatalysatormenge höchstens 15 % des Gewichts des Ligninsulfonsäuresalzes und des 1 bis 10 saccharidische Struktureinheiten enthaltenden Zuckers ausmacht.

**13.** Matte nach Anspruch 12, **dadurch gekennzeichnet, dass** die Vernetzungskatalysatormenge höchstens 10 % des Gewichts des Ligninsulfonsäuresalzes und des 1 bis 10 saccharidische Struktureinheiten enthaltenden Zuckers ausmacht.

**14.** Matte nach einem der Ansprüche 1 bis 13, **dadurch gekennzeichnet, dass** sie ferner bis zu 15 Gewichtsanteile eines Vinylacetatpolymers auf 100 Gewichtsanteile des aus dem Ligninsulfonsäuresalz und dem 1 bis 10 saccharidische Struktureinheiten enthaltenden Zucker bestehenden Gemisches enthält.

**15.** Matte nach Anspruch 14, **dadurch gekennzeichnet, dass** das Vinylacetatpolymer ein Homopolymer oder ein Copolymer mindestens eines hydrophoben Monomers wie Ethylen, Propylen, Butylen, Styrol und Vinylchlorid ist.

**16.** Matte nach einem der Ansprüche 1 bis 15, **dadurch gekennzeichnet, dass** sie ferner bis zu 50 Gewichtsanteile eines Polysaccharids mit einer molaren Masse größer oder gleich 100.000 g/mol auf 100 Gewichtsanteile des Ligninsulfonsäuresalzes und des 1 bis 10 saccharidische Struktureinheiten enthaltenden Zuckers umfasst.

**17.** Matte nach einem der Ansprüche 1 bis 16, **dadurch gekennzeichnet, dass** sie ferner die nachstehenden üblichen Additive in den folgenden Verhältnissen, berechnet auf der Grundlage von 100 Gewichtsanteilen des Ligninsulfonsäuresalzes und des 1 bis 10 saccharidische Struktureinheiten enthaltenden Zuckers, umfasst:

- 0 bis 1 Gewichtsanteile Silan, insbesondere ein Aminosilan,
- 0 bis 5 Gewichtsanteile eines Silikons, eines pflanzlichen Öls oder einer fluorierten Verbindung und
- 0 bis 5 Gewichtsanteile eines Weichmachers, insbesondere Glycerin.

**18.** Matte nach einem der Ansprüche 1 bis 17, **dadurch gekennzeichnet, dass** die Fasern synthetische oder natürliche mineralische Fasern oder organische Fasern sind.

**19.** Matte nach einem der Ansprüche 1 bis 18, **dadurch gekennzeichnet, dass** die Fasern in Form von mineralischen diskontinuierlichen Filamenten, von mineralischen Fäden, die aus einer Vielzahl mineralischer Filamente bestehen (Basisfäden), oder von Bündelungen dieser Basisfäden zu Rovings vorliegen.

**20.** Matte nach einem der Ansprüche 1 bis 19, **dadurch gekennzeichnet, dass** sie ein Flächengewicht aufweist, das zwischen 10 und 1100 g/m$^2$ variiert.

**21.** Matte nach Anspruch 20, **dadurch gekennzeichnet, dass** sie ein Flächengewicht aufweist, das zwischen 30 und 350 g/m$^2$ variiert.

**22.** Matte nach Anspruch 21, **dadurch gekennzeichnet, dass** sie ein Flächengewicht aufweist, das zwischen 35 und 60 g/m$^2$ variiert.

**23.** Matte nach einem der Ansprüche 1 bis 22, **dadurch gekennzeichnet, dass** das Bindemittel 5 bis 40 Gew.-% der Fasermatte ausmacht.

**24.** Matte nach Anspruch 23, **dadurch gekennzeichnet, dass** das Bindemittel 10 bis 30 Gew.-% der Fasermatte ausmacht.

**25.** Matte nach einem der Ansprüche 1 bis 24, **dadurch gekennzeichnet, dass** die Fasern zu mehr als 50 Gew.-% aus mineralischen Fasern bestehen.

**26.** Matte nach Anspruch 25, **dadurch gekennzeichnet, dass** die Fasern zu mehr als 75 Gew.-% aus mineralischen Fasern bestehen.

**27.** Matte nach Anspruch 26, **dadurch gekennzeichnet, dass** die Fasern zu 100 Gew.-% aus mineralischen Fasern bestehen.

**Claims**

**1.** A mat based on fibers comprising an aqueous binder **characterized in that** it comprises, in parts by weight:

- 20 to 95 parts of at least one lignosulfonic acid salt;
- 5 to 80 parts of at least one sugar comprising 1 to 10 saccharide motifs; and
- 5 to 20 parts of a curing catalyst selected from compounds containing phosphorus and sulfates per 100 parts of lignosulfonic acid salt and of sugar comprising 1 to 10 saccharide motifs;

said composition being devoid of organic polycarboxylic acid.

2. The mat as claimed in claim 1, **characterized in that** the lignosulfonic acid salt is selected from sodium, calcium, potassium, magnesium and ammonium lignosulfonates.

3. The mat as claimed in claim 2, **characterized in that** the lignosulfonic acid salt is ammonium lignosulfonate.

4. The mat as claimed in claim 1 to 3, **characterized in that** the sugar is a monosaccharide, a disaccharide, a trisaccharide, a tetrasaccharide or a fructose polymer such as a fructan.

5. The mat as claimed in claim 4, **characterized in that** the sugar is selected from glucose, mannose, galactose, fructose, saccharose, maltose, cellobiose, trehalose, lactose, gentobiose, melibiose, raffinose, gentianose, stachyose and inulins.

6. The mat as claimed in one of claims 1 to 5, **characterized in that** the lignosulfonic acid salt represents 30% to 90% by weight of the mixture constituted by the lignosulfonic acid salt and the sugar comprising 1 to 10 saccharide motifs.

7. The mat as claimed in claim 6, **characterized in that** the lignosulfonic acid salt represents 40% to 80% by weight of the mixture constituted by the lignosulfonic acid salt and the sugar comprising 1 to 10 saccharide motifs.

8. The mat as claimed in claim 7, **characterized in that** the lignosulfonic acid salt represents 50% to 70% by weight of the mixture constituted by the lignosulfonic acid salt and the sugar comprising 1 to 10 saccharide motifs.

9. The mat as claimed in one of claims 1 to 8, **characterized in that** the curing catalyst is an alkali metal hypophosphite salt, an alkali metal phosphite, an alkali metal polyphosphate, an alkali metal hydrogen phosphate, a phosphoric acid or an alkylphosphonic acid, an ammonium phosphate and ammonium sulfate.

10. The mat as claimed in claim 11, **characterized in that** the alkali metal of the curing catalyst is sodium or potassium.

11. The mat as claimed in claim 9 or claim 10, **characterized in that** the curing catalyst is sodium hypophosphite, diammonium phosphate or ammonium sulfate.

12. The mat as claimed in one of claims 1 to 11, **characterized in that** the quantity of curing catalyst represents at most 15% of the weight of the lignosulfonic acid salt and of the sugar comprising 1 to 10 saccharide motifs.

13. The mat as claimed in claim 12, **characterized in that** the quantity of curing catalyst represents at most 10% of the weight of the lignosulfonic acid salt and of the sugar comprising 1 to 10 saccharide motifs.

14. The mat as claimed in one of claims 1 to 13, **characterized in that** it further comprises up to 15 parts by weight of a vinyl acetate polymer per 100 parts by weight of mixture constituted by the lignosulfonic acid salt and the sugar comprising 1 to 10 saccharide motifs.

15. The mat as claimed in claim 14, **characterized in that** the vinyl acetate polymer is a homopolymer or a copolymer of at least one hydrophobic monomer such as ethylene, propylene, butylene, styrene or vinyl chloride.

16. The mat as claimed in one of claims 1 to 15, **characterized in that** it further comprises up to 50 parts by weight of a polysaccharide with a molar mass of 100 000 g/mol or more, per 100 parts by weight of lignosulfonic acid salt and of sugar comprising 1 to 10 saccharide motifs.

17. The mat as claimed in one of claims 1 to 16, **characterized in that** it further comprises the conventional additives given below in the following proportions, calculated on a base of 100 parts by weight of lignosulfonic acid salt and of sugar comprising 1 to 10 saccharide motifs:

- 0 to 1 part by weight of silane, in particular an aminosilane;
- 0 to 5 parts by weight of a silicone, a vegetable oil or a fluorinated compound; and
- 0 to 5 parts by weight of a plasticizer, in particular glycerol.

18. The mat as claimed in one of claims 1 to 17 **characterized in that** the fibers are mineral fibers or organic, synthetic or natural fibers.

19. The mat as in one of claims 1 to 18, **characterized in that** the fibers are in the form of discontinuous mineral filaments, mineral threads composed of a multitude of mineral filaments (base threads) or said base threads assembled into rovings.

20. The mat as claimed in one of claims 1 to 19, **characterized in that** it has a mass per unit area in the range 10 to 1100 $g/m^2$.

21. The mat as claimed in claim 20, **characterized in that** it has a mass per unit area in the range 30 to 350 $g/m^2$.

22. The mat as claimed in claim 21, **characterized in that** it has a mass per unit area in the range 35 to 60 $g/m^2$.

23. The mat as claimed in one of claims 1 to 22, **characterized in that** the binder represents 5% to 40% of the weight of the mat of fibers.

24. The mat as claimed in claim 23, **characterized in that** the binder represents 10% to 30% of the weight of the mat of fibers.

25. The mat as claimed in one of claims 1 to 24, **characterized in that** the fibers are constituted by more than 50% by weight of mineral fibers.

26. The mat as claimed in claim 25, **characterized in that** the fibers are constituted by more than 75% by weight of mineral fibers.

27. The mat as claimed in claim 26, **characterized in that** the fibers are constituted by 100% by weight of mineral fibers.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5340868 A
- US 5318990 A
- US 5661213 A
- US 6331350 B
- US 20030008978 A
- US 5977232 A
- US 5932689 A
- US 6071994 A
- US 6099773 A
- US 6146746 A
- US 20020091185 A
- US 6299936 B
- US 20020188055 A
- US 20040002567 A
- US 20050215153 A
- US 5895804 A
- WO 2009080938 A